## Europäisches Patentamt
## European Patent Office
## Office européen des brevets

(19)

(11) Numéro de publication: **0 094 277**
**B1**

(12)

# FASCICULE DE BREVET EUROPEEN

(45) Date de publication du fascicule du brevet:
**31.07.85**

(21) Numéro de dépôt: **83400800.5**

(22) Date de dépôt: **22.04.83**

(51) Int. Cl.⁴: **A 47 K 5/12,** B 65 D 83/00,
G 01 F 11/02

(54) **Dispositif distributeur doseur de produit visqueux.**

(30) Priorité: **06.05.82 FR 8207900**

(43) Date de publication de la demande:
**16.11.83 Bulletin 83/46**

(45) Mention de la délivrance du brevet:
**31.07.85 Bulletin 85/31**

(84) Etats contractants désignés:
**AT BE CH DE GB IT LI NL**

(56) Documents cités:
**EP - A - 0 028 727**
**FR - A - 836 556**
**FR - A - 2 160 123**

(73) Titulaire: **L'OREAL, 14, Rue Royale, F-75008 Paris (FR)**

(72) Inventeur: **Goncalves, Antonin, 41, rue du Lac Marchais,
F-95410 Groslay (FR)**

(74) Mandataire: **Peuscet, Jacques, 3, Square de Maubeuge,
F-75009 Paris (FR)**

BUNDESDRUCKEREI BERLIN

# Description

La présente invention concerne un dispositif distributeur doseur de produit visqueux, destiné à distribuer des doses déterminées d'une pâte, notamment une pâte dentifrice, d'une crème ou analogues.

On connaît déjà (voir notamment les demandes de brevet français numéros 81-14131, 81-14132 et 81-14133 déposées le 21 Juillet 1981) différents dispositifs doseurs dans lesquels un piston est entraîné dans un corps de forme cylindrique pour chasser progressivement le produit à distribuer. Le déplacement du piston est assuré par une crémaillère qui, lorsqu'elle se déplace dans un sens, entraîne le piston et, lorsqu'elle se déplace dans l'autre sens, n'entraîne pas le piston en raison de la présence d'un dispositif approprié qui débraie alors le piston de la crémaillère. Les commandes successives de la crémaillère provoquent des déplacements successifs du piston et la distribution de doses successives de produit. Dans ces appareils, la commande du déplacement du piston s'effectue généralement à une première extrémité du corps, et le produit est distribué à l'autre extrémité. L'orifice de distribution est souvent disposé selon l'axe du corps si bien que le produit est distribué suivant cet axe ou en position légèrement décentrée.

Ces dispositifs connus, bien qu'ils permettent la distribution de doses précises du produit visqueux, présentent plusieurs inconvénients. D'abord, le produit est distribué à l'extrémité opposée à l'extrémité de commande si bien que, lorsque le distributeur est tenu à la main et lorsque le piston est déplacé à l'aide d'un doigt, le produit est distribué à une certaine distance et l'effort exercé par la main a tendance à faire dévier l'extrémité de distribution du produit si bien que la mise en place de celui-ci, par exemple sur une brosse à dents, est délicate. Ensuite, le fait que le produit soit distribué suivant l'axe du corps ou parallèlement à cet axe oblige l'utilisateur à tourner la main de 90 degrés pour pouvoir distribuer commodément le produit. Enfin, la fermeture de l'orifice de distribution nécessite, avant et après la distribution, l'enlèvement et la mise en place d'un bouchon.

L'invention concerne un dispositif distributeur doseur de produit visqueux tel que la commande et l'orifice de distribution du produit se trouvent à la même extrémité du corps, si bien que l'application du produit à l'endroit voulu, par exemple sur une brosse à dents, est très simple et commode.

L'invention concerne aussi un dispositif distributeur, dans lequel le mouvement de commande de la distribution s'effectue en direction transversale par rapport à l'axe du corps et peut donc être assuré par simple déplacement d'un doigt pendant que le reste de la main serre le corps.

Elle concerne aussi un dispositif distributeur qui ne nécessite aucun bouchon, la commande de la distribution provoquant l'ouverture de l'orifice de distribution puis sa fermeture automatique.

Elle concerne enfin un dispositif distributeur doseur, dans lequel le produit visqueux contenu à l'intérieur du corps est séparé de l'atmosphère extérieure par une double fermeture.

Plus précisément, l'invention concerne un dispositif distributeur doseur pour produit visqueux, qui comporte un corps cylindrique destiné à contenir le produit à distribuer, un piston destiné à coulisser de façon étanche dans le corps, une crémaillère disposée dans le corps et destinée à se déplacer parallèlement à l'axe du corps entre deux positions, un dispositif d'actionnement destiné à déplacer la crémaillère entre ses deux positions, et un cliquet solidaire du piston, monté sur la crémaillère et destiné à transmettre les déplacements de la crémaillère au piston, lorsque la crémaillère se déplace dans un premier sens suivant sa longueur, et à glisser le long de la crémaillère lorsqu'elle se déplace dans le second sens; selon l'invention, le dispositif d'actionnement de la crémaillère comporte un curseur destiné à se déplacer dans une première direction transversale ayant une première inclinaison par rapport à l'axe du corps, et le dispositif distributeur comporte, en outre, un ensemble de deux éléments comprenant un premier élément formant une came et un deuxième élément formant un toucheau de came, la came ayant une surface de guide, qui est disposée dans une seconde direction transversale ayant une seconde inclinaison par rapport à l'axe du corps, cette seconde inclinaison étant différente de la première, l'un des éléments dudit ensemble étant solidaire du curseur et l'autre de la crémaillère.

Il est avantageux que la came comporte deux surfaces de guidage destinées à être au contact du toucheau lorsque le curseur se déplace dans un premier sens et dans un second sens respectivement.

Le curseur est avantageusement guidé dans le corps par des saillies formées sur le curseur ou sur le corps et destinées à glisser dans des rainures formées sur le corps ou sur le curseur respectivement.

Il est avantageux que la crémaillère ait au moins une partie dont la forme n'est pas de révolution et qui est au contact du corps ou du curseur afin que la crémaillère ne puisse pas tourner autour de son axe.

Dans un mode de réalisation avantageux, le corps comporte une partie plane sensiblement parallèle à la première direction transversale selon laquelle se déplace le curseur, un orifice traversant cette partie plane et débouchant à l'intérieur du corps, et le curseur a une partie plane sensiblement parallèle à ladite première direction transversale, cette partie plane formant un obturateur, un canal de distribution étant formé dans le curseur et ayant une première embouchure adjacente à l'obturateur, l'obturateur et la première embouchure du canal étant alternativement en face de l'orifice du corps, lorsque le curseur est dans une première ou dans une seconde position respectivement par rapport au corps.

Le canal est avantageusement coudé et a une seconde embouchure opposée à la première et qui débouche selon une direction sensiblement transversale par rapport à l'axe du corps.

Le dispositif distributeur comporte aussi avantageusement un volet destiné à obturer ou à dégager la seconde embouchure du canal, ledit volet étant articulé sur le corps autour d'un axe perpendiculaire à la première direction transversale de déplacement du curseur, le volet et le curseur portant chacun un élément d'un autre ensemble, qui comprend un premier élément formant une came et un second élément formant un toucheau, le déplacement initial du curseur à partir de sa première position provoquant la coopération de ladite came et dudit toucheau et le pivotement du volet, afin qu'il dégage la seconde embouchure du canal.

Dans ce cas, le premier élément formant une came a avantageusement un prolongement de came destiné à coopérer avec le second élément formant un toucheau lorsque le curseur continue à se déplacer, ce prolongement étant sensiblement parallèle à la direction de déplacement du curseur dans la position de dégagement du volet.

Il est avantageux que le dispositif distributeur comporte, en outre, un organe élastique de rappel du curseur vers l'une de ses positions par rapport au corps. Par exemple, lorsque le curseur ou le corps est formé d'une matière plastique moulée, l'organe élastique de rappel peut être un doigt élastique moulé en une seule pièce avec le curseur ou avec le corps.

Dans la présente demande de brevet, l'expression »direction transversale par rapport à l'axe du corps« désigne une direction qui n'est pas parallèle à l'axe du corps, mais qui n'est pas forcément perpendiculaire à cet axe. Ainsi, la direction de déplacement du curseur et la direction de la surface de guidage du premier élément formant une came sont toutes deux transversales par rapport à l'axe du corps et selon une caractéristique de l'invention, elles forment entre elles un angle non nul.

Pour mieux faire comprendre l'objet de l'invention, on va décrire maintenant, à titre d'exemple illustratif et non limitatif, un mode de réalisation et une variante, représentés sur le dessin annexé.

Sur ce dessin:

— la figure 1 est une coupe longitudinale schématique d'un dispositif distributeur doseur selon l'invention;

— la figure 2 est une coupe analogue à la figure 1 représentant la partie supérieure du dispositif lorsque le curseur a pris une autre position;

— la figure 3 est une perspective éclatée de la partie supérieure d'une variante de dispositif distributeur doseur selon l'invention comportant un volet d'obturation; et

— les figures 4 et 5 sont des élévations latérales schématiques de la partie supérieure de la variante de dispositif distributeur de la figure 3, dans deux positions différentes du volet d'obturation.

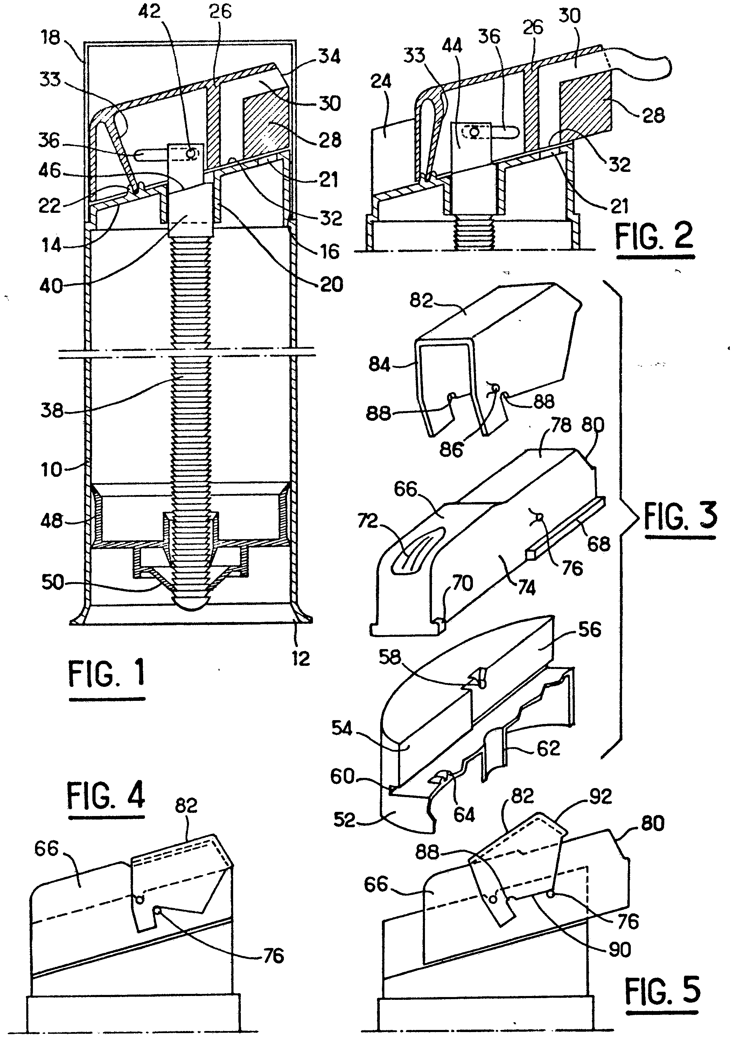

La figure 1 est une coupe longitudinale d'un exemple de dispositif distributeur doseur selon l'invention. Celui-ci comporte un corps cylindrique 10 de section circulaire, ayant une extrémité inférieure ouverte 12, qui peut d'ailleurs être bouchée par tout dispositif rapporté convenable tel qu'une rondelle de carton ou de matière plastique. L'autre extrémité du corps est fermée par un fond 14 oblique par rapport à l'axe du corps. La partie du corps 10, qui est adjacente au fond 14, a un diamètre légèrement réduit et permet l'emmanchement d'un bouchon 18, qui n'est utilisé qu'à titre de protection avant la vente du dispositif. Ce bouchon peut ensuite être jeté et n'a aucun rôle pour le fonctionnement du dispositif distributeur.

Le fond 14 comporte, dans sa partie centrale, une saillie 20 percée d'un orifice cylindrique d'axe parallèle à l'axe du corps. La section de cet orifice peut être circulaire ou non, comme indiqué plus loin.

Le fond 14 a aussi un orifice 21 de sortie du produit visqueux que doit contenir le corps, et des saillies d'accrochage 22 dont la fonction est indiquée plus loin. La figure 2, sur laquelle le curseur 26 est déplacé par rapport à sa position de la figure 1, montre que le fond 14 forme des joues 24 qui délimitent entre elles un canal ouvert vers le haut destiné au logement d'une partie du curseur 26. Le curseur 26 a une partie avant 28 dans laquelle est formé un canal 30; celui-ci a une première embouchure 32 qui, dans la position de la figure 2, est disposée en face de l'orifice 21 du corps, et une seconde embouchure 34 destinée à évacuer le produit distribué, comme indiqué sur la figure 2. Le curseur comporte, en outre, à l'intérieur, deux évidements 36 formant des surfaces de came dont la direction est perpendiculaire à l'axe du corps. Bien qu'on ait indiqué que les évidements 36 sont perpendiculaires à l'axe du corps, cette caractéristique n'est pas indispensable: il suffit que la direction des évidements 36 soit transversale à l'axe du corps et ne soit pas parallèle à la direction du fond 14.

Le dispositif distributeur comporte, en outre, une crémaillère 38, par exemple sous forme d'une tige filetée, solidaire d'une tête cylindrique 40 dont la section externe correspond à la section de l'orifice de la saillie 20 du corps. Cette tête 40 est destinée à coulisser dans ledit orifice tout en empêchant la sortie du produit visqueux entre elle et cette saillie. La partie de la tête 40, qui se trouve à l'extérieur du corps, porte deux ergots 42 destinés à se loger dans les évidements 36 et formés dans une partie 44 de largeur réduite de la tête. Cette partie 44 est délimitée sur ses bords par deux méplats 46 qui, par contact avec les faces internes du curseur 26, sont destinés à empêcher la rotation de la crémaillère 38 autour de l'axe du corps.

Le dispositif distributeur comporte enfin un piston 48, qui peut coulisser le long de la crémaillère, mais dans un sens seulement car des cliquets 50 ne permettent que la remontée du piston le long de la crémaillère 38.

Les figures 1 et 2 font facilement comprendre le fonctionnement du dispositif distributeur selon l'invention. L'utilisateur, qui veut distribuer une dose de produit, après avoir retiré le capuchon 18 à la première utilisation, saisit le corps 10 dans sa main et repousse le curseur 26 de la position représentée sur la figure 1 à celle qui est représentée sur la figure 2, par exemple à l'aide de son pouce. Le curseur 26, convenablement guidé par un dispositif, tel que décrit plus loin (en se référant à la figure 3), se déplace le long du fond incliné 14 et l'embouchure 32 du canal 30 vient en face de l'orifice 21 du corps. Simultanément, lorsque le curseur se déplace le long du fond 14, les évidements 36 se déplacent aussi parallèlement à ce fond 14, si bien que les ergots 42, qui sont retenus dans ces évidements, parviennent à l'autre extrémité de ceux-ci, comme représenté sur la figure 2; cette seconde extrémité est plus éloignée du fond 14 que la première extrémité: en conséquence, la crémaillère 38 est tirée vers le haut. Pendant ce mouvement, les cliquets 50 sont coincés dans les spires de la crémaillère 38 si bien que le piston 48 est aussi entraîné vers le haut. Il chasse donc du produit visqueux qui sort par l'orifice 21, l'embouchure 32, le canal 30 et l'embouchure 34. L'utilisateur peut donc placer le produit reçu, par exemple de la pâte dentifrice, sur une brosse à dents très commodément puisque la brosse à dents se place à proximité immédiate de sa main qui assure la distribution.

Si l'utilisateur relâche alors le curseur, il reste normalement dans cette position: il est donc souhaitable que le curseur ou le corps comporte un organe élastique quelconque destiné à ramener le curseur 26 dans sa position initiale. Comme représenté sur les figures 1 et 2, le curseur a ainsi un doigt élastique 33, dont l'extrémité libre est emprisonnée entre les deux saillies 22 du fond 14. Ce doigt 33, qui a fléchi lors de l'avance du curseur vers la position de la figure 2, a alors tendance à rappeler le curseur vers la position de la figure 1. Pendant ce mouvement, les évidements 36 se déplacent avec le curseur, le long du fond 14, si bien qu'ils repoussent les ergots 42 vers le bas; en conséquence, la crémaillère 38 descend. Lors de cette descente, le filetage de la crémaillère 38 écarte facilement les cliquets 50 si bien que le piston ne redescend pas.

Les figures 3 à 5 représentent une variante de dispositif, dans laquelle on a prévu un volet d'obturation. Cette variante possède aussi d'autres caractéristiques, qui peuvent être avantageusement utilisées dans le mode de réalisation des figures 1 et 2.

Plus précisément, le dispositif distributeur doseur représenté sur les figures 3 à 5 a un corps 52 dont seule une moitié de la partie supérieure est représentée sur la figure 3. Cette partie supérieure délimite un canal ayant des parois latérales 54, 56. La distance séparant les parois latérales 54 est légèrement supérieure à celle du curseur, qui doit y coulisser. Par contre, les parois latérales 56 ont un espacement supérieur à celui des parois 54 car non seulement le curseur, mais aussi un volet doivent être disposés entre elles. Les parois 56 présentent chacune un logement 58 de forme cylindrique à embouchure évasée vers le haut destiné à retenir un ergot, ledit logement ayant un axe perpendiculaire à la paroi latérale 54 ou 56, où il est pratiqué.

Des rainures 60 sont formées à la partie inférieure des parois 54, 56. Le corps comporte aussi une saillie 62 de guidage de crémaillère, des saillies 64 de retenue de ressort et un orifice d'évacuation de produit, analogues aux éléments correspondants du mode de réalisation des figures 1 et 2.

Le curseur destiné à coulisser entre les parois du corps porte la référence 66. Il a, à la partie inférieure de ses faces latérales 74, des saillies allongées 68 et de courtes saillies 70 destinées à coulisser dans les rainures 60 du corps. Une zone 72 du curseur est avantageusement moletée afin de faciliter l'application d'une force par un doigt sur le curseur. Les faces latérales 74 portent des ergots 76 destinés à constituer des tourillons, et la partie avant du curseur 66 a une hauteur réduite comme indiqué par la référence 78. En outre, la partie avant 80 est formée légèrement en retrait comme indiqué sur la figure 5, afin qu'un volet 82 puisse se loger seur le curseur comme indiqué sur la figure 4.

Le volet 82 a deux joues latérales 84, dont dépassent des ergots 86 destinés à constituer des tourillons. Des encoches 88 forment une surface de came qui est prolongée par une surface de came rectiligne 90, comme représenté sur la figure 5. La partie avant du volet forme un obturatuer 92. Comme le montrent les figures 4 et 5, le volet 82 est placé sur le curseur 66 de manière que les ergots 76 se logent dans les encoches 88. Le curseur 66 est engagé dans le canal délimité par le corps et le volet 82 est alors mis en place en enclenchant les ergots 86 du volet 82 dans les logements 58 des parois latérales 56.

On va décrire maintenant le fonctionnement du volet 82 représenté sur les figures 3 à 5. Lorsque le curseur 66 est repoussé vers la droite sur les figures 4 ou 5, l'ergot 76 enclenché dans l'encoche 88 est chassé vers la droite et il chasse donc vers le haut le volet 82 puisque celui-ci est retenu par coopération des ergots 86 avec les logements 58 du corps. Le volet bascule dans la position représentée sur la figure 5 et son obturateur avant 92 permet alors le passage du curseur. L'embouchure du canal de distribution débouchant dans la partie avant 80 est ainsi dégagée, car l'ergot 76, par coopération avec le prolongement 90, maintient le volet 82 en position haute.

Lorsque l'utilisateur a prélevé le produit dosé, il relâche le curseur 66. Comme dans le mode de réalisation des figures 1 et 2, celui-ci est rappelé élastiquement vers sa position initiale et l'ergot 76 glisse le long de la surface 90 et vient s'enclencher dans l'encoche 88. Vers la fin du mouvement du curseur vers la gauche sur les figures 4 et 5, l'ergot 76 repousse le fond de l'encoche 88 si bien que le volet 82 doit s'abaisser et reprend la position indiquée sur la figure 4.

Ainsi, dans ce mode de réalisation, non seulement l'orifice de communication du corps avec le canal de distribution est fermé lors du retour du curseur en position initiale mais encore l'embouchure de distribution est elle-même fermée. Le volet évite donc le séchage du produit distribué.

Le montage de l'appareil s'effectue de la manière suivante. Le curseur est glissé dans le canal formé dans la partie supérieure du corps (avec éventuellement addition du volet). La crémaillère est alors introduite par l'extrémité inférieure 12 de manière que ses ergots viennent s'enclencher dans les évidements 36. Ensuite, l'appareil est retourné et rempli du produit à distribuer. Le piston est alors emmanché sur la crémaillère. Le fond 12 peut éventuellement être fermé par une rondelle de carton ou de matière plastique.

Le dispositif distributeur doseur selon l'invention est formé d'un petit nombre d'éléments qui sont robustes et peu coûteux. Son avantage principal est de permettre la distribution du produit avec une seule main et à proximité de la main qui tient le dispositif. De cette manière, la mise en place du produit distribué est très commode. En outre, la fermeture automatique assure la conservation du produit dans les meilleures conditions, sans que l'utilisateur ait à effectuer le moindre geste supplémentaire.

Il est bien entendu que l'appareil ci-dessus décrit pourra donner 1 eu à toute modification souhaitable, sans sortir pour cela du cadre de l'invention. Par exemple, le système à piston et crémaillère peut être de différents types connus. La caractéristique essentielle est que le fonctionnement soit obtenu par déplacement alternatif de la crémaillère 38 parallèlement à son axe.

Bien qu'on ait indiqué que la crémaillère portait des ergots formant des toucheaux de came destinés à coulisser dans les évidements 36 formant des surfaces de came, la disposition peut être inverse. Plus précisément, le curseur peut comporter des saillies allongées destinées à se déplacer dans des rainures formées dans la tête de la crémaillère. Cette disposition empêche aussi la rotation de la crémaillère autour de son axe. Cette rotation peut aussi être évitée par utilisation d'une crémaillère et d'une saillie 20 de section non circulaire.

On a indiqué que le rappel du curseur était assuré par un doigt élastique solidaire du curseur. Bien entendu, l'organe de rappel peut aussi être solidaire du corps puisque la force de rappel doit être exercée entre le curseur et le corps. Cependant, un ressort indépendant peut aussi assurer ce rappel.

Il est très avantageux que les différents éléments décrits soient formés de matière plastique moulée, par mise en œuvre de la technologie bien connue.

## Revendications

1. Dispositif distributeur doseur pour produit visqueux, qui comporte un corps cylindrique (10) destiné à contenir le produit à distribuer, un piston (48) destiné à coulisser de façon étanche dans le corps, une crémaillère (38) disposée dans le corps et destinée à se déplacer parallèlement à l'axe du corps entre deux positions, un dispositif d'actionnement destiné à déplacer la crémaillère (38) entre ses deux positions, et un cliquet (50) solidaire du piston, monté sur la crémaillère et destiné à transmettre les déplacements de la crémaillère au piston lorsque la crémaillère se déplace dans un premier sens suivant sa longueur et à glisser le long de la crémaillère lorsque celle-ci se déplace dans le second sens, caractérisé par le fait que le dispositif d'actionnement de la crémaillère (38) comporte un curseur (26) destiné à se déplacer en translation dans une première direction transversale ayant une première inclinaison par rapport à l'axe du corps, et que le dispositif distributeur comporte, en outre, un ensemble de deux éléments comprenant un premier élément (36) formant une came et un deuxième élément (42) formant un toucheau de came, la came (36) ayant une surface de guidage, qui est disposée dans une seconde direction transversale ayant une seconde inclinaison par rapport à l'axe du corps, la seconde inclinaison étant différente de la première, l'un des éléments dudit ensemble étant solidaire du curseur et l'autre de la crémaillère.

2. Dispositif selon la revendication 1, caractérisé par le fait que l'élément formant une came (36) a deux surfaces de guidage destinées à glisser respectivement au contact du toucheau selon que le curseur se déplace dans un premier sens ou en sens opposé.

3. Dispositif selon l'une des revendications 1 ou 2, caractérisé par le fait que le curseur (66) est guidé dans le corps (52) par des saillies (68, 70) formées sur le curseur ou sur le corps et destinées à glisser dans des rainures (60) formées sur le corps ou sur le curseur respectivement.

4. Dispositif selon l'une des revendications 1 à 3, caractérisé par le fait que la crémaillère (38) a au moins une partie (46), dont la forme n'est pas de révolution et qui est au contact du corps ou du curseur afin que la crémaillère ne puisse pas tourner autour de son axe.

5. Dispositif selon l'une des revendications 1 à 4, caractérisé par le fait que le corps (10) comporte une partie plane (14) sensiblement parallèle à la première direction transversale selon laquelle se déplace le curseur (26), un orifice (21) traversant cette partie plane et débouchant à l'intérieur du corps (10), et le curseur (26) a une partie plane (28) sensiblement parallèle à ladite première direction transversale et formant obturateur, un canal (30) de distribution étant formé dans le curseur et ayant une première embouchure (32) adjacente à l'obturateur, l'obturateur et la première embouchure (32) du canal (30) étant alternativement en face de l'orifice (21) du corps (10), lorsque le curseur est dans une première position et dans une seconde position respectivement par rapport au corps.

6. Dispositif selon la revendication 5, caractérisé par le fait que le canal (30) est coudé et a une seconde embouchure (34) opposée à la première embouchure (32), ladite seconde embouchure débouchant selon une direction sensiblement transversale par rapport à l'axe du corps.

7. Dispositif selon la revendication 6, caractérisé par le fait qu'il comporte un volet (82) destiné à obturer ou dégager la seconde embouchure (34) du canal (30) et articulé sur le corps (52) autour d'un axe perpendiculaire à la première direction transversale de déplacement du curseur (66), le volet (82) et le curseur (66) comportant chacun l'un des deux éléments d'un autre ensemble, qui comprend un premier élément (88) formant une came et un second élément (76) formant un toucheau, le déplacement initial du curseur (66) à partir de sa première position provoquant la coopération de la came et du toucheau et le pivotement du volet (82) afin qu'il dégage la seconde embouchure (34) du canal (30).

8. Dispositif selon la revendication 7, caractérisé par le fait que le premier élément formant une came (88) comporte un prolongement (90) de came destiné à coopérer avec le second élément formant un toucheau (76) lorsque le curseur (66) continue à se déplacer, ce prolongement étant sensiblement parallèle à la direction de déplacement du curseur quand le volet (82) est en position de dégagement.

9. Dispositif selon l'une des revendications 1 à 8, caractérisé par le fait qu'il comprend un organe élastique (33) de rappel du curseur (26) vers l'une de ses positions par rapport au corps (10).

10.Dispositif selon la revendication 9, caractérisé par le fait que le curseur (26) ou le corps (10) est formé d'une matière plastique moulée, et que l'organe élastique de rappel est un doigt élastique (33) moulé en une seule pièce avec le curseur (26) ou le corps (10).

## Patentansprüche

1. Dosierabgabevorrichtung für ein viskoses Produkt, umfassend einen zylindrischen Körper (10) zur Aufnahme des zu verteilenden Produktes, einen Kolben (48), der unter Abdichtung im Körper verschoben werden kann, eine Zahnleiste (38), die im Körper angeordnet ist und sich zwischen zwei Stellungen parallel zur Achse des Körpers verschieben kann, eine Betätigungsvorrichtung zum Verschieben der Zahnstange (38) zwischen ihren zwei Positionen, und eine Klinke (50), die mit dem Kolben verbunden und auf der Zahnleiste montiert ist und welche die Auslenkungen der Zahnstange auf den Kolben überträgt, wenn die Zahnstange in einer ersten Richtung entlang ihrer Längsachse verschoben wird, und die entlang der Zahnstange gleitet, wenn diese in einer zweiten Richtung verschoben wird, dadurch gekennzeichnet, daß die Betätigungsvorrichtung für die Zahnstange (38) einen Schieber (26) aufweist, der in einer ersten Querrichtung mit einer ersten Neigung zur Achse des Körpers verschoben wird, und daß die Abgabevorrichtung außerdem eine Anordnung aus zwei Elementen aufweist, mit einem ersten Element (36) das eine Steuerkurve, und einem zweiten Element (42), das einen Steuerkurvenanschlag bildet, wobei die Steuerkurve (36) eine Gleitfläche hat, die in einer zweiten Querrichtung angeordnet ist und eine zweite Neigung zur Achse des Körpers hat, wobei die zweite Neigung anders verläuft, als die erste Neigung, und wobei das eine Element der Anordnung mit dem Schieber, das andere mit der Zahnstange verbunden ist.

2. Vorrichtung nach Anspruch 1, dadurch gekennzeichnet, daß das Element, welches die Steuerkurve (36) bildet, zwei Führungsflächen aufweist, von denen jeweils eine in Gleitkontakt mit dem Anschlag gelangt, wenn der Schieber in einer ersten Richtung bzw. in der entgegengesetzten Richtung verschoben wird.

3. Vorrichtung nach einem der Ansprüche 1 oder 2, dadurch gekennzeichnet, daß der Schieber (66) auf dem Körper (52) über Vorsprünge (68, 70) auf dem Schieber oder auf dem Körper geführt ist, die in Rinnen (60) auf dem Körper bzw. auf dem Schieber gleiten sollen.

4. Vorrichtung nach einem der Ansprüche 1—3, dadurch gekennzeichnet, daß die Zahnleiste (38) mindestens einen Abschnitt (46) aufweist, der nicht rotations-symmetrisch ist und der in Kontakt mit dem Körper oder dem Schieber steht, damit sich die Zahnstange nicht um ihre eigene Achse drehen kann.

5. Vorrichtung nach einem der Ansprüche 1—4, dadurch gekennzeichnet, daß der Körper (10) einen flachen Abschnitt (14) aufweist, der im wesentlichen parallel zur ersten Querrichtung verläuft, in welcher der Schieber (26) verschoben wird, sowie eine Öffnung (21), welche durch diesen ebenen Abschnitt führt und im Inneren des Körpers (10) endet, und daß der Schieber (26) einen ebenen Abschnitt (28) aufweist, der im wesentlichen parallel zur ersten Querrichtung verläuft und einen Verschluß bildet, sowie einen Abgabekanal (30) im Schieber und eine erste Mündung (32) angrenzend an den Verschluß, wobei entweder der Verschluß oder die erste Öffnung (32) des Kanals (30) mit der Öffnung (21) des Körpers (10) in Deckung gebracht wird, wenn der Schieber in einer ersten Stellung bzw. in einer zweiten Stellung zum Körper ist.

6. Vorrichtung nach Anspruch 5, dadurch gekennzeichnet, daß der Kanal (30) gekrümmt verläuft und eine zweite Mündung (34) gegenüber der ersten Mündung (32) aufweist, welche in einer Richtung verläuft, die im wesentlichen quer zur Achse des Körpers verläuft.

7. Vorrichtung nach Anspruch 6, dadurch gekennzeichnet, daß sie eine Klappe (82) aufweist zum Verschließen oder Öffnen der zweiten Mündung (34) des Kanals (30), die am Körper (52) um eine Achse schwenkbar gelagert ist, die senkrecht zur ersten Querrichtung der Verschiebung des Schiebers (66) liegt, wobei die Klappe (82) und der Schieber (66) jeweils ein Element einer anderen Anordnung aufweisen, die ein erstes Element (88) umfaßt, das eine Steuerfläche bildet, sowie ein zweites Element (76), welches einen Anschlag bildet, wobei die Anfangsverschiebung des Schiebers (66) von seiner ersten Position aus die Steuerfläche und den Anschlag in Wirkverbindung bringt und die Klappe (82) schwenkt, so daß sie die zweite Mündung (34) des Kanals (30) freigibt.

8. Vorrichtung nach Anspruch 7, dadurch gekennzeichnet, daß das erste Element, welches die Steuerfläche (88) bildet, eine Verlängerung (90) der Steuerfläche aufweist, die mit dem zweiten Element, das den Anschlag (76) bildet, zusammenwirkt, wenn der Schieber (66) weiter verschoben wird, wobei diese Verlängerung im wesentlichen parallel zur Verschieberichtung des Schiebers verläuft, wenn die Klappe (82) in ihrer Freigabeposition ist.

9. Vorrichtung nach einem der Ansprüche 1—8, dadurch gekennzeichnet, daß sie ein elastisches Organ (33) aufweist, das den Schieber (26) in eine seiner Relativ-Positionen zum Körper (10) zurückholt.

10. Vorrichtung nach Anspruch 9, dadurch gekennzeichnet, daß der Schieber (26) oder der Körper (10) aus Kunststoffguß geformt ist, und daß das elastische Rückholorgan eine elastische Zunge (33) ist, die einstückig mit dem Schieber (26) oder dem Körper (10) geformt ist.

**Claims**

1. A dosage dispenser device for a viscous product which comprises a cylindrical barrel (10) intended to contain the product to be dispensed, a piston (48) intended to slide in a leak proof manner in the barrel, a rack (38) disposed in the barrel and intended to be displaced parallel to the axis of the barrel between two positions, an actuating device intended to displace the rack (38) between its two positions, and a catch (50) integral with the piston mounted on the rack and intended to transmit the displacements of the rack to the piston when the rack is displaced in a first direction along its length and to slide along the rack when the latter is displaced in the second direction, characterised in that the actuation device for rack (38) comprises a slider (26) intended for translational displacement in a first transverse direction, having a first inclination in relation to the axis of the barrel and that the dispenser device does, moreover, comprise a set of two elements comprising a first element (36) forming a cam and a second element (42) forming a cam contact piece, cam (36) having a guide surface which is disposed in a second transverse direction, having a second inclination in relation to the axis of the barrel, the second inclination being different from the first, one of the elements of the said set being integral with the slider and the other with the rack.

2. A device according to Claim 1, characterised in that the element forming a cam (36) has two guide surfaces intended to slide respectively in contact with the contact piece, depending as to whether the slider is displaced in the first direction or in the opposite direction.

3. A device according to one of Claims 1 or 2, characterised in that the slider (66) is guided in body (52) by projections (68, 70) formed on the slider or on the body and intended to slide in grooves (60) formed on the body or on the slider respectively.

4. A device according to one of Claims 1 to 3, characterised in that the rack (38) has at least one part (46) whose shape is not of revolution and which is in contact with the barrel or with the slider so that the rack should not be capable of sliding around its axis.

5. A device according to one of Claims 1 to 4, characterised in that the barrel (10) comprises a flat portion (14) substantially parallel to the first transverse direction along which the slider (26) is displaced, an opening (21) traversing this flat portion and issuing within barrel (10) and the slider (26) has a flat portion (28) substantially parallel to the said first transverse direction and forming an obturator, a dispensing passage (30) being formed in the slider and having a first aperture (32) adjacent to the obturator, the obturator and the first aperture (32) of channel (30) being alternately opposite opening (21) of barrel (10), when the slider is in a first position and in a second position respectively in relation to the barrel.

6. A device according to Claim 5, characterised in that the passage (30) is bent and has a second aperture (34) on the opposite side to the first aperture (32), the said second aperture issuing along a substantially transverse direction in relation to the axis of the barrel.

7. A device according to Claim 6, characterised in that it comprises a lid (82) intended to obturate or free the second aperture (34) of passage (30) and articulated on body (52) around an axis perpendicular to the first transverse direction of the displacement of slider (66), lid (82) each comprising one of the two elements of another set which comprises a first element (88) forming a cam and a second element (76) forming a contact piece, the initial displacement of slider (66) from its first position producing the cooperation of the cam and of the contact piece and the swivelling of lid (82) so that it frees the second aperture (34) of passage (30).

8. A device according to Claim 7, characterised in that the first element forming a cam (88) comprises a cam extension (90) intended to cooperate with the second element forming a contact piece (76) when the slider (66) continues

13     **0 094 277**     14

to be displaced, this extension being substantially parallel to the direction of displacement of the slider when the lid (82) is in the release position.

9. A device according to one of Claims 1 to 8, characterised in that it comprises an elastic member (33) for re-straining slider (26) towards one of its positions in relation to barrel (10).

10. A device according to Claim 9, characterised in that the slider (26) or barrel (10) are formed of a moulded plastic material and that the elastic re-straining member is an elastic finger (33) moulded integrally with the slider (26) or the barrel (10).

8

FIG. 1

FIG. 2

FIG. 3

FIG. 4

FIG. 5